# EUROPEAN PATENT APPLICATION

(11) **EP 1 956 068 A1**
(43) Date of publication of application: **13.08.2008**
(21) Application number: 06797046.7
(22) Date of filing: 30.08.2006
(51) Int. Cl.: C09K 11/62, C09K 11/08, C01G 9/08, B82B 1/00, B82B 3/00

(54) **SEMICONDUCTOR NANOPARTICLE AND METHOD FOR MANUFACTURING SAME**

(30) Priority: 02.09.2005 JP 2005255656
(71) Applicant: National University Corporation Nagoya University, Nagoya-shi, Aichi 464-8601 (JP); OSAKA UNIVERSITY, Suita-shi, Osaka 565-0871 (JP); National University Corporation Hokkaido University, Sapporo-shi, Hokkaido 060-0808 (JP); Tokyo University Of Science Educational Foundation Administrative Organization, Shinjuku-ku Tokyo 162-8601 (JP)
(72) Inventor: TORIMOTO, Tsukasa, Aichi 464-8601 (JP); KUWABATA, Susumu, Osaka 565-0871 (JP); OHTANI, Bunsho c/o National University Corporation, Kita-ku, Sapporo-shi Hokkaido 001-0021 (JP); SHIBAYAMA, Tamaki c/o National University Corporation Hokkaido University, Kita 13-jyo, Nishi 8-chome Kita-ku, Sapporo-shi Hokkaido 060-8628 (JP); KUDO, Akihiko, Tokyo 162-8601 (JP); SAKURAOKA, Miwa, Hokkaido 064-0823 (JP); ADACHI, Tomohiro, Aichi 464-8601 (JP)
(74) Representative: Grünecker, Kinkeldey, Stockmair & Schwanhäusser Anwaltssozietät
(86) International application number: PCT/JP2006/317072
(87) International publication number: WO 2007/026746

(57) **Abstract**

The present invention provides semiconductor nanoparticles which emit light at room temperature and include a sulfide or oxide containing zinc, a Group 11 element in the periodic table, and a Group 13 element in the periodic table as a main component or a sulfide or oxide containing a Group 11 element in the periodic table and a Group 13 element in the periodic table as a main component. For example, the semiconductor nanoparticles are represented by Zn(₁₋₂ₓ)InₓAgₓS (0 < x ≤ 0.5).

## Description

### Technical Field

The present invention relates to semiconductor nanoparticles and a method of producing the same, and specifically to semiconductor nanoparticles which emit light at room temperature and a method of producing the same.

### Background Art

There have been known semiconductor nanoparticles of CdS, CdSe, CdTe, PbS, PbSe, and the like (refer to, for example, Patent Documents 1 and 2). As the diameter of such semiconductor nanoparticles decreases to about 10 nm or less, the semiconductor nanoparticles exhibit physiochemical properties completely different from those of large bulk semiconductor particles due to a quantum size effect. In the semiconductor nanoparticles of such a size, the degeneracy of the energy bands that is observed in bulk semiconductor particles is removed to discretize the energy bands, and the band gap energy increases as the particle size decreases. Further, an emission spectrum of the semiconductor nanoparticles is greatly changed in such a manner that the emission peak position of the band gap shifts to the short-wavelength side as the particle size decreases. In addition, the emission wavelength can be freely controlled by controlling the size of the semiconductor nanoparticles, and the semiconductor nanoparticles are several orders more stable than an organic dye under irradiation with exciting light. The emission peak width of the semiconductor nanoparticles is sufficiently narrower than that of an organic dye. Therefore, at present, luminescent materials have been actively developed using semiconductor nanoparticles. In particular, the use as a marker for identifying specified molecules such as biological molecules reaches the stage of practical application.
Patent Document 1: Japanese Unexamined Patent Application Publication No. 2004-243507
Patent Document 2: Japanese Unexamined Patent Application Publication No. 2004-352594

### Disclosure of Invention

In previous researches, nanoparticles having an intended emission peak wavelength have been formed by precisely controlling the diameter of the semiconductor nanoparticles. However, intended semiconductor particles are particles of CdS, CdSe, CdTe, PbS, and PbSe and contain an element having high toxicity, and a synthesis precursor thereof also has high toxicity. Although semiconductor nanoparticles of InP or the like, which has relatively low toxicity, have been synthesized, the precursor used is a phosphorus compound having very high toxicity. Among these nanoparticles, semiconductor nanoparticles having low toxicity and produced using a precursor having low toxicity in the production process are demanded.

The present invention has been achieved for complying with the demand, and an object of the present invention is to provide semiconductor nanoparticles which sufficiently emit light without using a compound with high toxicity in a production process. Another object is to provide a method of relatively easily producing the semiconductor nanoparticles.

As a result of intensive research for achieving the objects, the inventors have found that semiconductor nanoparticles composed of a sulfide or oxide as a main component emit light at room temperature, leading to the completion of the present invention.

In a first aspect of the present invention, semiconductor nanoparticles which emit light at room temperature include a sulfide or oxide containing zinc and a Group 11 element and a Group 13 element in the periodic table as a main component or a sulfide or oxide containing a Group 11 element and a Group 13 element in the periodic table as a main component. The semiconductor nanoparticles of the present invention may emit light at a temperature other than room temperature as long as they emit light at room temperature. In the specification, "room temperature" represents 15°C to 25°C. The term "light emission" represents that electrons absorb energy (e.g., light energy, electric energy, chemical energy, thermal energy, or the like) to be excited, and then the excited electrons emit light energy when being inactivated regardless of whether fluorescence or phosphorescence. The energy absorbed is preferably light energy or electric energy.

Examples of the Group 11 element in the periodic table include, but are not limited thereto, Cu, Ag, and Au. Among these elements, Cu and Ag are preferred, and Ag is particularly preferred. Examples of the Group 13 element in the periodic table include, but are not limited thereto, Ga, In, and Tl.
Among these elements, Ga and In are preferred, and In is particularly preferred.

In a second aspect of the present invention, semiconductor nanoparticles which emit light at room temperature include a sulfide or oxide containing zinc and a Group 11 element and a Group 13 element in the periodic table as a main component or a sulfide or oxide containing a Group 11 element and a Group 13 element in the periodic table as a main component, the surfaces of the particles being modified with a lipid-soluble compound.

Since the Group 11 and 13 elements are the same as in the first aspect of the present invention, description thereof is omitted. The lipid-soluble compound may be any compound as long as it can be bonded to the surfaces of the particles composed of the sulfide or oxide as a main component. Examples of the bond type include, but are not limited thereto, chemical bonds such as a covalent bond, an ionic bond, a coordination bond, a hydrogen bond, and a Van der Waals bond. Typical examples of the lipid-soluble compound include nitrogen-containing compounds each containing a hydrocarbon group having 4 to 20 carbon atoms, sulfur-containing compounds each containing a hydrocarbon group having 4 to 20 carbon atoms, and oxygen-containing compounds each containing a hydrocarbon group having 4 to 20 carbon atoms. Examples of the hydrocarbon group having 4 to 20 carbon atoms include saturated aliphatic hydrocarbon groups; such as a n-butyl group, an isobutyl group, a n-pentyl group, a n-hexyl group, an octyl group, a decyl group, a dodecyl group, a hexadecyl group, and an octadecyl group; unsaturated aliphatic hydrocarbon groups, such as an oleyl group; alicyclic hydrocarbon groups, such as a cyclopentyl group and a cyclohexyl group; and aromatic hydrocarbon groups, such as a phenyl group, a benzyl group, a naphthyl group, and a naphthylmethyl group. Among these groups, the saturated aliphatic hydrocarbon groups and the unsaturated aliphatic hydrocarbon groups are preferred. Examples of the nitrogen-containing compounds include amines and amides, examples of the sulfur-containing compounds include thiols, and examples of the oxygen-containing compounds include fatty acids. Among these lipid-soluble compounds, the nitrogen-containing compounds each having a hydrocarbon group having 4 to 20 carbon atoms are preferred. Preferred examples of such compounds include alkylamines such as n-butylamine, isobutylamine, n-pentylamine, n-hexylamine, octylamine, decylamine, dodecylamine, hexadecylamine, and octadecylamine; and alkenylamines such as oleylamine.

In a third aspect of the present invention, semiconductor nanoparticles which emit light at room temperature are produced by mixing a zinc salt, a salt of a Group 11 element in the periodic table, a salt of a Group 13 element in the periodic table, and a ligand containing sulfur or oxygen as a coordinating element or mixing a salt of a Group 11 element in the periodic table, a salt of a Group 13 element in the periodic table, and a ligand containing sulfur or oxygen as a coordinating element to form a complex, heating the complex to form a heat-treated product, and heating the heat-treated product together with a lipid-soluble compound.

Since the Group 11 and 13 elements are the same as in the first aspect of the present invention, and the lipid-soluble compound is the same as in the second aspect of the present invention, description thereof is omitted. Examples of the ligand containing sulfur as a coordinating element include, but are not limited thereto, β-dithiones such as 2,4-pentanedithione; dithiols such as 1,2-bis(trifluoromethyl)ethylene-1,2-dithiol; and diethyldithiocarbamates. Examples of the ligand containing oxygen as a coordinating element include, but are not limited thereto, β-diketones such as acetylacetone and hexafluoroacetylacetone; and tropolone.

The conditions for heat treatment of the complex vary according to the raw materials used and thus cannot be determined absolutely. However, in general, the reaction temperature is preferably set in the range of 100°C to 300°C and more preferably in the range of 150°C to 200°C. The temperature represents the temperature of a heating device for heating a reaction vessel.
The preferred reaction time range also varies according to the reaction temperature, but in general, the reaction time is preferably set in the range of several seconds to several hours and more preferably in the range of 1 to 60 minutes.

The conditions for heating the heat-treated product together with the lipid-soluble compound vary according to the raw materials used and thus cannot be determined absolutely. However, in general, the reaction temperature is preferably set in the range of 100°C to 300°C and more preferably in the range of 150°C to 200°C. As the reaction temperature decreases, the emission peak wavelength tends to shift to the short-wavelength side. Although the cause for this is not known, a conceivable cause is that at a lower temperature, the growth of particles is suppressed, and thus smaller nanoparticles are produced, thereby increasing the degree of the quantum size effect. The temperature represents the temperature of a heating device for heating a reaction vessel. The preferred reaction time range also varies according to the reaction temperature, but in general, the reaction time is preferably set in the range of several seconds to several hours and more preferably set in the range of 1 to 60 minutes. As the reaction time increases, the emission peak wavelength tends to shift to the long-wavelength side. Although the cause for this is not known, a conceivable cause is that the growth of particles is accelerated by increasing the reaction time, and thus larger nanoparticles are produced, thereby decreasing the degree of the quantum size effect.

In a fourth aspect of the present invention, semiconductor nanoparticles which emit light at room temperature are produced by mixing a zinc salt, a salt of a Group 11 element in the periodic table, a salt of a Group 13 element in the periodic table, and a ligand containing sulfur or oxygen as a coordinating element or mixing a salt of a Group 11 element in the periodic table, a salt of a Group 13 element in the periodic table, and a ligand containing sulfur or oxygen as a coordinating element to form a complex, and heating the complex together with a lipid-soluble compound. In the third aspect of the present invention, the step of heat-treating the complex and the step of heating the heat-treated product together with the lipid-soluble compound are sequentially performed (sequential method). However, in the fourth aspect of the present invention, the step of heat-treating the complex is omitted, and both the complex and the lipid-soluble compound are heated to heat-treat the complex and react the heat-treated product with the lipid-soluble compound at the same time (simultaneous method).

Since the Group 11 and 13 elements are the same as in the first aspect of the present invention, the lipid-soluble compound is the same as in the second aspect of the present invention, and the ligand containing sulfur or oxygen as a coordinating element is the same as in the third aspect of the present invention, description thereof is omitted. The conditions for heating the complex together with the lipid-soluble compound vary according to the raw materials used and thus cannot determined absolutely. However, in general, the reaction temperature is preferably set in the range of 100°C to 300°C and more preferably set in the range of 150°C to 200°C. As the reaction temperature decreases, the emission peak wavelength tends to shift to the short-wavelength side. Although the cause for this is not known, a conceivable cause is that at a lower temperature, the growth of particles is suppressed, and thus smaller nanoparticles are produced, thereby increasing the degree of the quantum size effect. The temperature represents the temperature of a heating device for heating a reaction vessel. The preferred reaction time range also varies according to the reaction temperature, but in general, the reaction time is preferably set in the range of several seconds to several hours and more preferably in the range of 1 to 60 minutes. As the reaction time increases, the emission peak wavelength tends to shift to the long-wavelength side. Although the cause for this is not known, a conceivable cause is that the growth of particles is accelerated by increasing the reaction time, and thus larger nanoparticles are produced, thereby decreasing the degree of the quantum size effect.

Since the third and fourth aspects of the present invention correspond to a so-called product-by-process claim, it is understood that the technical scope of the present invention includes not only semiconductor nanoparticles produced through the process described in the claims but also semiconductor nanoparticles produced through a process other than the process described in the claims as long as they are substantially the same as the semiconductor nanoparticles produced through the process described in the claims. In the first to fourth aspects of the present invention, the particle size of the semiconductor nanoparticles with which the quantum size effect appears depends on the composition, but the particle size is preferably 100 nm or less, more preferably 50 nm or less, and most preferably 20 nm or less.

In a fifth aspect of the present invention, a method of producing semiconductor nanoparticles which emit light at room temperature includes mixing a zinc salt, a salt of a Group 11 element in the periodic table, a salt of a Group 13 element in the periodic table, and a ligand containing sulfur or oxygen as a coordinating element or mixing a salt of a Group 11 element in the periodic table, a salt of a Group 13 element in the periodic table, and a ligand containing sulfur or oxygen as a coordinating element to form a complex, heating the complex to form a heat-treated product, and heating the heat-treated product together with a lipid-soluble compound.

Since the Group 11 and 13 elements are the same as in the first aspect of the present invention, the lipid-soluble compound is the same as in the second aspect of the present invention, and the ligand containing sulfur or oxygen as a coordinating element is the same as in the third aspect of the present invention, description thereof is omitted. Also, the conditions for heat treatment of the complex and the conditions for heating the heat-treated product together with the lipid-soluble compound are the same as in the third aspect of the present invention, description thereof is omitted.

In a sixth aspect of the present invention, a method of producing semiconductor nanoparticles which emit light at room temperature includes mixing a zinc salt, a salt of a Group 11 element in the periodic table, a salt of a Group 13 element in the periodic table, and a ligand containing sulfur or oxygen as a coordinating element or mixing a salt of a Group 11 element in the periodic table, a salt of a Group 13 element in the periodic table, and a ligand containing sulfur or oxygen as a coordinating element to form a complex, and heating the complex together with a lipid-soluble compound.

Since the Group 11 and 13 elements are the same as in the first aspect of the present invention, the lipid-soluble compound is the same as in the second aspect of the present invention, and the ligand containing sulfur or oxygen as a coordinating element is the same as in the third aspect of the present invention. Also, the conditions for heating the complex together with the lipid-soluble compound are the same as in the fourth aspect of the present invention.

In the first to sixth aspects of the present invention, the zinc salt, the salt of the Group 11 element in the periodic table, the salt of the Group 13 element in the periodic table, and the ligand containing sulfur or oxygen as a coordinating element are preferably mixed so that the atomic number ratio (= molar ratio) between zinc, the Group 11 element in the periodic table, and the Group 13 element in the periodic table is (1 - 2x):x:x (wherein 0 < x ≤ 0.5). The semiconductor nanoparticles of the present invention have the property that the luminescent color after excitation with exciting light varies according to the x value. Therefore, the semiconductor nanoparticles which emit light of a desired color can be produced by appropriately setting the x value. When the x value is 0.5, the ratio of the number of zinc atoms is zero. This means that the Group 11 element and the Group 13 element in the periodic table are mixed at a ratio between the numbers of atoms of 1:1.

In the first to fourth aspects of the present invention, zinc and the Group 11 element and the Group 13 element in the periodic table are used in the process for producing the semiconductor nanoparticles, and thus an element with high toxicity, such Cd or the like, is not used unlike in a conventional process. Therefore, the semiconductor nanoparticles can be produced in a safe environment. Since the semiconductor nanoparticles satisfactorily emit light at room temperature, they are promising as a material for vital staining dyes and optical devices. In particular, the color of emitted light can be controlled to be any one of various colors only by changing the ratio between the numbers of atoms of zinc, the Group 11 element in the periodic table, and the Group 13 element in the periodic table, and the nanoparticles can be expected to be used in various technical fields.

In each of the methods of producing semiconductor nanoparticles in the fifth and sixth aspects of the present invention, zinc and the Group 11 element and the Group 13 element in the periodic table are used in the process for producing the semiconductor nanoparticles, and thus an element with high toxicity, such Cd or the like, is not used unlike in a conventional process. Therefore, the semiconductor nanoparticles can be produced in a safe environment. Since the semiconductor nanoparticles produced in the production method satisfactorily emit light at room temperature, they are promising as a material for vital staining dyes and optical devices. In particular, the color of emitted light can be controlled to be any one of various colors only by changing the ratio between the numbers of atoms of zinc, the Group 11 element in the periodic table, and the Group 13 element in the periodic table, and the nanoparticles can be expected to be used in various technical fields.

### Brief Description of Drawings

Fig. 1 is a graph showing emission spectra of hexadecylamine-modified nanoparticles in 1-butanol.
Fig. 2 is a photograph showing TEM images of hexadecylamine-modified nanoparticles.
Fig. 3 is a graph showing a particle size distribution of hexadecylamine-modified nanoparticles.
Figs. 4(a) and 4(b) are graphs showing excitation spectra and emission spectra, respectively, of oleylamine-modified nanoparticles dissolved in oleylamine.
Fig. 5 is a graph showing emission spectra of oleylamine-modified nanoparticles precipitated in oleylamine.
Figs. 6(a) and 6(b) are graphs showing absorption spectra and emission spectra, respectively, of oleylamine-modified nanoparticles dissolved in chloroform and oleylamine.
Fig. 7 is a graph showing emission spectra of oleylamine-modified nanoparticles produced with different chemical modification times.
Fig. 8 is a graph showing emission spectra (solvent: chloroform) of amine-modified nanoparticles produced at different chemical modification temperatures.
Fig. 9 is a graph showing emission spectra (solvent: chloroform) of amine-modified nanoparticles produced by different heat treatment methods, in which a solid line shows a simultaneous method and a dotted line shows a sequential method.
Fig. 10 is a graph illustrating XRD patterns of Zn₁₋₂ₓInₓAgₓS₂ nanoparticles.
Fig. 11 is a graph illustrating XRD patterns of ZnS in different crystal systems.
Fig. 12 is a graph illustrating XRD patterns of AgInS₂ in different crystal systems.
Fig. 13 is a graph showing a relation between the x value and emission peak position of Zn₁₋₂ₓInₓAgₓS nanoparticles.
Figs. 14(a) and 14(b) are graphs showing an absorption spectrum and an emission spectrum, respectively, of oleylamine-modified nanoparticles dissolved in chloroform.

### Best Mode for Carrying Out the Invention

Best modes for carrying out the invention will be described in detail with reference to examples.

### EXAMPLE 1

A 0.1 mol·dm⁻³ aqueous solution of sodium diethyldithiocarbamate was added to an aqueous solution (metal ion concentration 0.1 mol·dm⁻³) containing Zn(NO₃)₂, In(NO₃)₃, and AgNO₃ at a ratio of (1 - 2x):x:x (in Example 1, x = 0.2) to obtain precipitates of diethyldithiocarbamate (complex Zn₍₁₋₂ₓ)InₓAgₓ(S₂CN(C₂H₅)₂)₂) (refer to the equation (1) below). The resultant complex was washed with methanol and dried under a reduced pressure to prepare a powder. Then, 50 mg of the powder was placed in a test tube which was then purged with argon, and heated at 180°C for 30 minutes under stirring with a magnetic stirrer bar to heat-treat the complex. As the heating temperature, the temperature of an aluminum block surrounding the test tube was measured. As a result, semiconductor nanoparticles (Zn₍₁₋₂ₓ₎InₓAgₓS) were produced (refer to the equation (2) below). Then, the semiconductor nanoparticles were cooled to room temperature, and 0.5 g of hexadecylamine was added as an alkylamine. After argon purging, the semiconductor nanoparticles were heated again at 180°C for 30 minutes under stirring to chemically modify the surfaces of the semiconductor nanoparticles with hexadecylamine. In this step, the semiconductor nanoparticles chemically modified with hexadecylamine were dispersed in excessive hexadecylamine which was solid at room temperature. Although, in this specification, the semiconductor nanoparticles are denoted by Zn₍₁₋₂ₓ)InₓAgₓS, this is a convenient notation based on the atomic number ratio (molar ratio) of the metals used for preparing the complex. The actually prepared semiconductor nanoparticles do not necessarily satisfy the composition formula ZnInAgₓS and possibly include nanoparticles with other compositions.

(1 - 2X)Zn²⁺, xIn³⁺, xAg⁺ + (C₂H₅)₂NCS₂⁻ → Zn₍₁₋₂ₓ₎InₓAgₓ(S₂CN(C₂H₅)₂)₂ Zn₍₁₋₂ₓ₎InₓAgₓ(S₂CN(C₂H₅)₂)₂ (1)

→ Zn₍₁₋₂ₓ₎InₓAgₓS + diethyldithiocarbamic acid decomposition product (2)

### EXAMPLE 2

Semiconductor nanoparticles chemically modified with hexadecylamine were synthesized by the same method as in Example 1 except that x = 0.3 to obtain the semiconductor nanoparticles dispersed in excessive hexadecylamine (solid at room temperature).

### EXAMPLE 3

Semiconductor nanoparticles chemically modified with hexadecylamine were synthesized by the same method as in Example 1 except that x = 0.5 to obtain the semiconductor nanoparticles dispersed in excessive hexadecylamine (solid at room temperature). In this case, since x = 0.5, the semiconductor nanoparticles were represented by In_{0.5}Ag_{0.5}S.

### EXAMPLE 4

### [Properties of semiconductor nanoparticles of Examples 1 to 3]

### 1. Emission characteristics

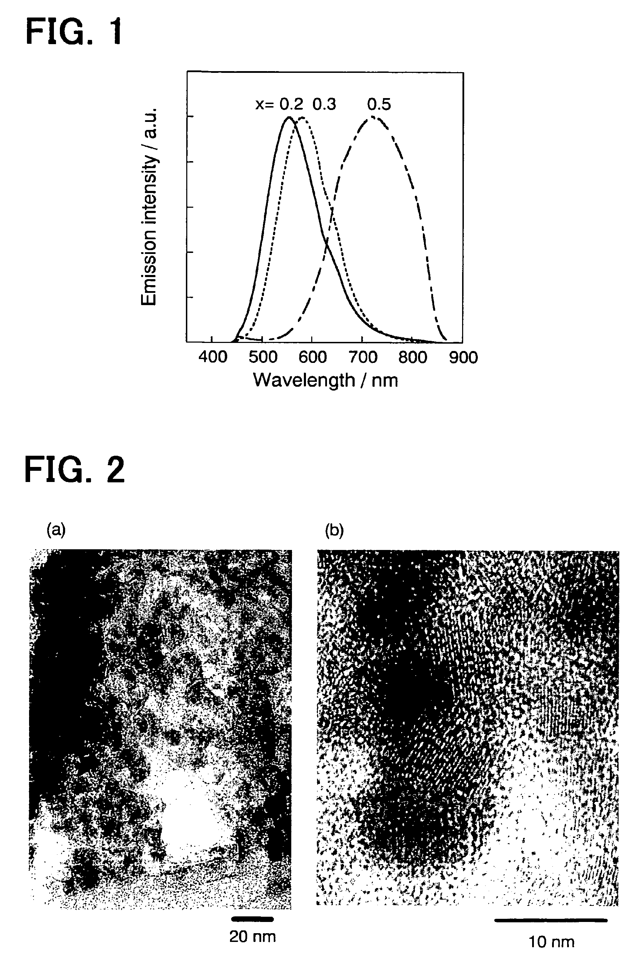

An emission spectrum of the semiconductor nanoparticles obtained in each of Examples 1 to 3 was measured. Namely, when the semiconductor nanoparticles chemically modified with hexadecylamine were dispersed in excessive hexadecylamine (solid at room temperature), the solid of any one of Examples 1 to 3 was brown under room light, but strong luminescent light was emitted by irradiation with ultraviolet light (wavelength 350 nm) at room temperature. The color of emitted light changed to green, yellow, and red as the x value increased to 0.2, 0.3, and 0.5, respectively. On the other hand, since the semiconductor nanoparticles produced in each of Examples 1 to 3 were dispersed in excessive hexadecylamine which was solid at room temperature, 1-butanol was added to dissolve the excessive hexadecylamine, and then the product was centrifuged to obtain semiconductor nanoparticles chemically modified with hexadecylamine as precipitates. The resultant precipitates were suspended in 1-butanol and irradiated with ultraviolet light (wavelength 400 nm) at room temperature, followed by measurement of emission spectra. As a result, as shown in Fig. 1, the emission peak shifted to long wavelengths of 550 nm, 580 nm, and 720 nm as the ratios of In and Ag used for synthesis increased, i.e., the x value increased to 0.2, 0.3, and 0.5, respectively.

### 2. TEM observation

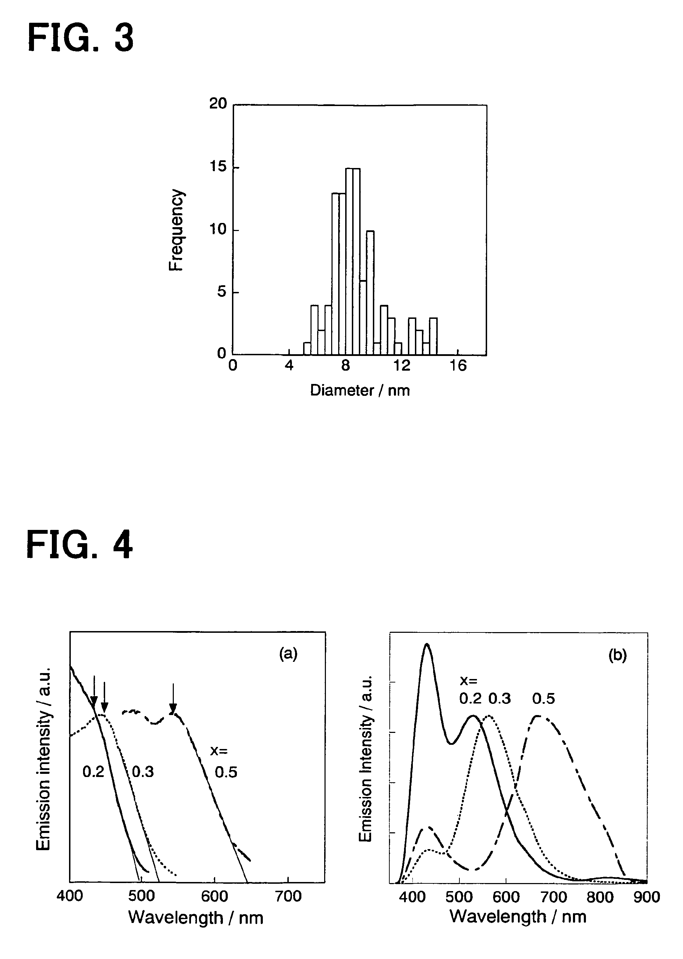

The semiconductor nanoparticles obtained in Example 1 were observed with a transmission electron microscope (TEM, 2010F model manufactured by JEOL, Ltd.). The results are shown in Fig. 2. Fig. 2(b) is a partially enlarged view of Fig. 2(a). As a TEM grid, a commercial carbon deposited micro grid (Okenshoji type B) was used. Since the semiconductor nanoparticles produced in Example 1 were dispersed in excessive hexadecylamine which was solid at room temperature, methanol was added to dissolve the excessive hexadecylamine and remove it by centrifugal separation. The resultant precipitates were further washed with methanol and then suspended in methanol. The resultant suspension was dropped on the TEM grid and then dried to form a sample. As a result of TEM observation of the sample, rod-shaped particles were observed in addition to many spherical particles (refer to Fig. 2). In a high-resolution image of the semiconductor nanoparticles, clear lattice fringes were observed. It was thus found that each nanoparticle is a particle with high crystallinity. As a result of composition analysis of the particles by an energy dispersive X-ray analyzer (EDX), any one of the particles contained all of Zn, In, Ag, and S. Although the ratio of the number of atoms of S contained in the particles was substantially constant at about 50% regardless of the particles prepared, the content ratios of the metal elements, i.e., Zn, In, and Ag, varied between 21 to 31%, 7 to 16%, and 5 to 11%, respectively, according to the particles. The particle size distribution of the spherical particles according to the TEM images was as shown in Fig. 3.
This indicates that the particle sizes are distributed from 5 nm to 15 nm, the average particle size is 8.8 nm, and the standard deviation is 1.9 nm.

### 3. Composition analysis of complex

The composition of the Zn₁₋₂ₓInₓAgₓ(S₂CNEt₂)₂ complex (x = 0.2, 0.3, or 0.5) was analyzed. The complex obtained in the course of production of the semiconductor nanoparticles in each of Examples 1 to 3 was washed with methanol several times and then dried under a reduced pressure to form a measurement sample. The results of composition analysis are shown in Table 1. In Table 1, each of the theoretical values and analysis values is represented by % by weight. Table 1 indicates that in any one of the complexes, the analysis values of S, C, N, and H elements sufficiently agree with the theoretical values regardless of the x values. This reveals that the Zn₁₋₂ₓInₓAgₓ(S₂CNEt₂)₂ complex having a chemical composition based on the ratio of the elements charged can be produced.

**Table 1**

| element | x=0.2 | | x=0.3 | | x=0.5 | |
|---|---|---|---|---|---|---|
| | theoretical value | analysis value | theoretical value | analysis value | theoretical value | analysis value |
| S | 33.73 | 33.50 | 32.93 | 32.60 | 31.45 | 30.94 |
| C | 31.58 | 31.38 | 30.84 | 30.55 | 29.45 | 29.00 |
| N | 7.37 | 7.32 | 7.19 | 7.15 | 6.87 | 6.71 |
| H | 5.30 | 5.04 | 5.18 | 4.97 | 4.94 | 4.65 |

### EXAMPLE 5

Semiconductor nanoparticles (x = 0.2) chemically modified with oleylamine were synthesized by the same method as in Example 1 except that oleylamine was used as an alkylamine. However, oleylamine was liquid at room temperature, and thus the procedures were as follows: The surfaces of the semiconductor nanoparticles were chemically modified with oleylamine, and then precipitates were separated from a supernatant by centrifugal separation. Then, 3 cm³ of methanol was added to the supernatant to precipitate the semiconductor nanoparticles chemically modified with oleylamine. The precipitates were isolated by centrifugal separation to remove excessive oleylamine. Then, 1 cm³ of chloroform was added to the resultant precipitates to again dissolve them. This operation (precipitation by adding methanol and re-dissolution in chloroform) was repeated two times to prepare a chloroform solution of the semiconductor nanoparticles chemically modified with oleylamine.

### EXAMPLE 6

Semiconductor nanoparticles chemically modified with oleylamine were synthesized by the same method as in Example 5 except that x = 0.3, and precipitates were separated from a supernatant by centrifugal separation. Also, a chloroform solution of the semiconductor nanoparticles was prepared.

### EXAMPLE 7

Semiconductor nanoparticles chemically modified with oleylamine were synthesized by the same method as in Example 5 except that x = 0.5, and precipitates were separated from a supernatant by centrifugal separation. Also, a chloroform solution of the semiconductor nanoparticles was prepared.

### EXAMPLE 8

### [Properties of semiconductor nanoparticles of Examples 5 to 7]

### 1. Emission characteristics of supernatant and precipitates

The supernatant and precipitates of the semiconductor nanoparticles chemically modified with oleylamine were irradiated with ultraviolet light (350 nm) at room temperature. In both the supernatant and the precipitates, strong luminescent light was emitted. The luminescent color was changed to green, yellow, and red as the x value was increased to 0.2, 0.3, and 0.5, respectively.

Fig. 4 shows emission and excitation spectra of the supernatant (solution of the semiconductor nanoparticles chemically modified with oleylamine in excessive oleylamine) of the semiconductor nanoparticles chemically modified with oleylamine. Fig. 4(a) shows excitation spectra, and Fig. 4(b) shows emission spectra. Fig. 4(a) indicates that each excitation spectrum has wide absorption on the shorter wavelength side than the absorption onset and thus shows a light absorption behavior peculiar to semiconductors. Further, an onset wavelength was determined by extrapolating a linear portion. As a result, it was found that the onset wavelength shifts to the long wavelengths of 500, 520, and 644 nm as the x values increases to 0.2, 0.3, and 0.5, respectively. Further, an exciton absorption peak was observed as shown by an arrow, and was found to shift to longer wavelengths as the x value increases. On the other hand, in the emission spectra shown in Fig. 4(b), the emission peak of oleylamine used as a solvent is observed at 430 nm, but the emission peak of the Zn₍₁₋₂ₓ₎InₓAgₓS nanoparticles shifts to longer wavelengths of 530, 560, and 670 nm as the x values increases to 0.2, 0.3, and 0.5, respectively.

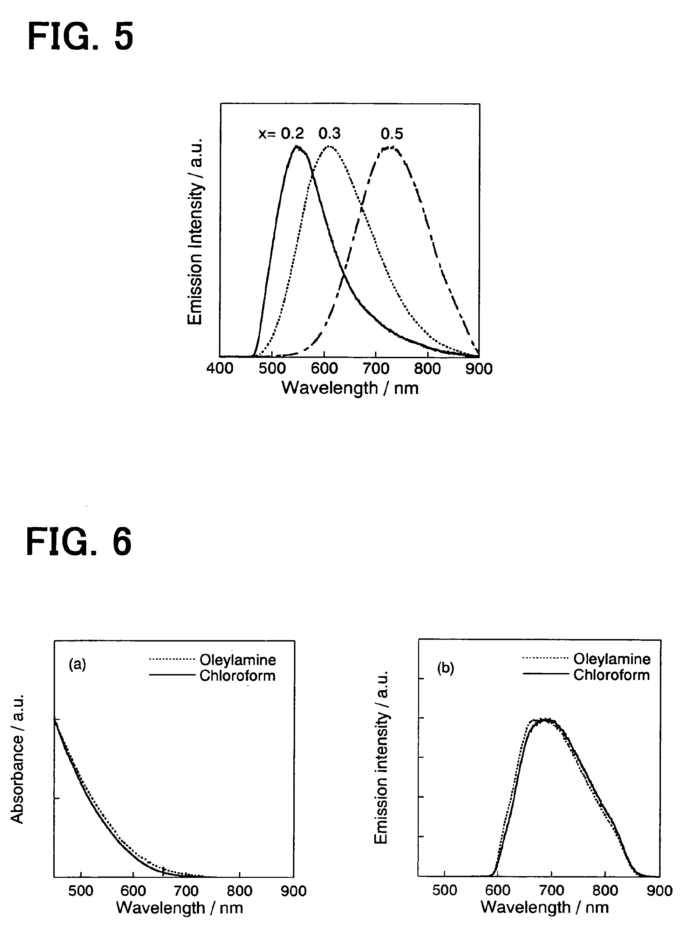

Fig. 5 shows emission spectra of the semiconductor nanoparticles chemically modified with oleylamine (the particles precipitated in oleylamine). Like the supernatant, in these emission spectra, the emission peak shifts to the longer wavelength side as the x value of Zn₍₁₋₂ₓ₎InₓAgₓS increases to 0.2, 0.3, and 0.5, respectively. However, in a comparison between the emission peaks with the same x value, the emission peak of the precipitates is positioned on the longer wavelength side than that of the uniform solution of the nanoparticles. This indicates that the two samples (supernatant and precipitates) have different Zn₍₁₋₂ₓ₎InₓAgₓS nanoparticle sizes. It is also known that the energy gap of semiconductor nanoparticles increases due to the quantum size effect as the particle size decreases, and the emission wavelength decreases as the nanoparticle size decreases. Therefore, these results suggest that the precipitated particles have a larger particle size.

### 2. Purification and emission behavior in chloroform

Absorption and emission spectra of the chloroform solution (containing the Zn₍₁₋₂ₓ₎InₓAgₓS (x = 0.5) semiconductor nanoparticles chemically modified with oleylamine) obtained in Example 7 were measured at room temperature. The results are shown in Fig. 6. Fig. 6(a) shows absorption spectra, and Fig. 6(b) shows emission spectra. Fig. 6 indicates that as well as the absorption spectra, the emission spectra are substantially the same regardless of the solvent used. This suggests that the nanoparticles are stably present without aggregation even after separation and purification operations. It is also found that the absorption spectrum rises at about 700 nm, and the rising wavelength substantially agrees with the emission peak wavelength. Further, an increase in absorbance due to light scattering as shown by secondary particles is not observed in the wavelength region of 700 nm or more. Therefore, it is found that the nanoparticles are uniformly dissolved in any solvent (uniformly dispersed without forming secondary particles).

### 3. Quantum yield

The emission quantum yield of the Zn₍₁₋₂ₓ₎InₓAgₓS (x = 0.5) nanoparticles in the chloroform solution obtained in Example 7 was determined by a relative method at room temperature using the fact that the fluorescence quantum yield (the ratio the number of photons emitted by luminescence to the number of photons absorbed) of fluorescein in a 0.1 mol·dm⁻³ NaOH aqueous solution is 0.92. As a result, the quantum yield was about 0.1, indicating that the nanoparticles emit light with a relatively high efficiency.

### 4. Influence of chemical modification time after addition of amine on emission spectrum

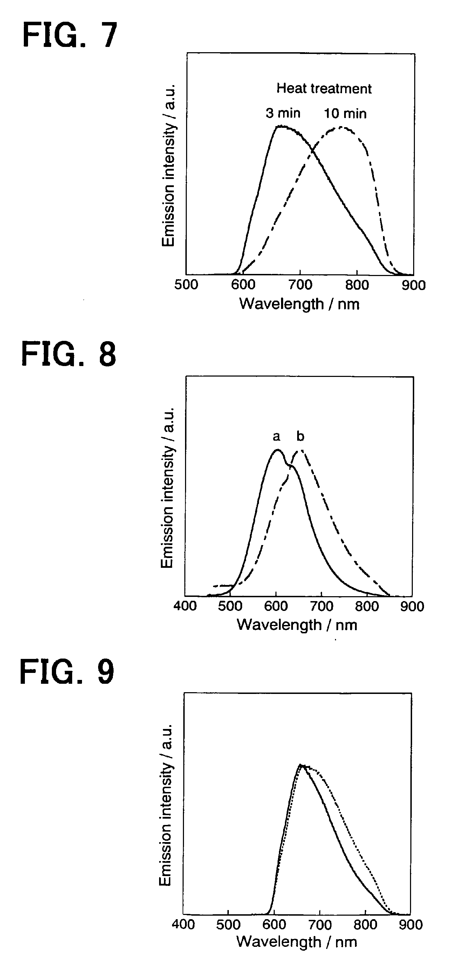

The time of chemical modification (reaction temperature 180°C) with oleylamine was changed to examine the influence on the emission characteristics of the produced particles. Although, in Example 7, the chloroform solution was prepared by chemical modification at 180°C for 3 minutes, in this example, a chloroform solution was prepared by chemical modification at 180°C for 10 minutes. As a result of the measurement of emission spectra of both solutions at room temperature, it was found that as shown in Fig. 7, the peak wavelength shifts to the longer wavelength side as the reaction time increases. This is possibly due to the phenomenon that particle growth is accelerated by increasing the heating time to produce larger nanoparticles, thereby deceasing the degree of the quantum size effect.

### 5. Influence of reaction temperature of surface chemical modification with amine

In order to examine the influence of the reaction temperature of surface chemical modification of particles, Zn₍₁₋₂ₓ)InₓAgₓS (x = 0.5) nanoparticles were produced by chemical modification at 150°C in oleylamine or octylamine. When oleylamine was used, the chloroform solution prepared by chemical modification at 180°C in Example 7 emitted strong luminescent light at room temperature, while the chloroform solution prepared by chemical modification at 150°C emitted little photo luminescence at room temperature. On the other hand, when octylamine was used, the chloroform solution prepared by chemical modification at 150°C emitted strong luminescent light at room temperature. Fig. 8 shows the resultant emission spectrum (a in Fig. 8) together with the result (b in Fig. 8) of the semiconductor nanoparticles chemically modified with oleylamine at 180°C. In the case of chemical modification with octylamine at a lower temperature, the emission peak wavelength shifts to the shorter wavelength side. This is possibly due to the suppression of particle growth at a lower surface treatment temperature.

### 6. Formation of nanoparticles by heat treatment of complex in coexistence with amine

In Examples 1 to 6, the complex was heat-treated, and then the particle surfaces were chemically modified with an amine to produce the Zn₍₁₋₂ₓ₎InₓAgₓS nanoparticles (referred to as the "sequential method"). As in Example 7, in this example, the complex with x = 0.5 was suspended in oleylamine and then heated at 180°C for 30 minutes to form semiconductor nanoparticles and chemically modify the surfaces of the particles at the same time (referred to as the "simultaneous method"). Fig. 9 shows emission spectra of the resultant particles at room temperature. The nanoparticles produced by the simultaneous method showed a slightly sharp spectrum, but no significant change was observed in the emission peak wavelength.

### 7. Crystal structure of nanoparticles

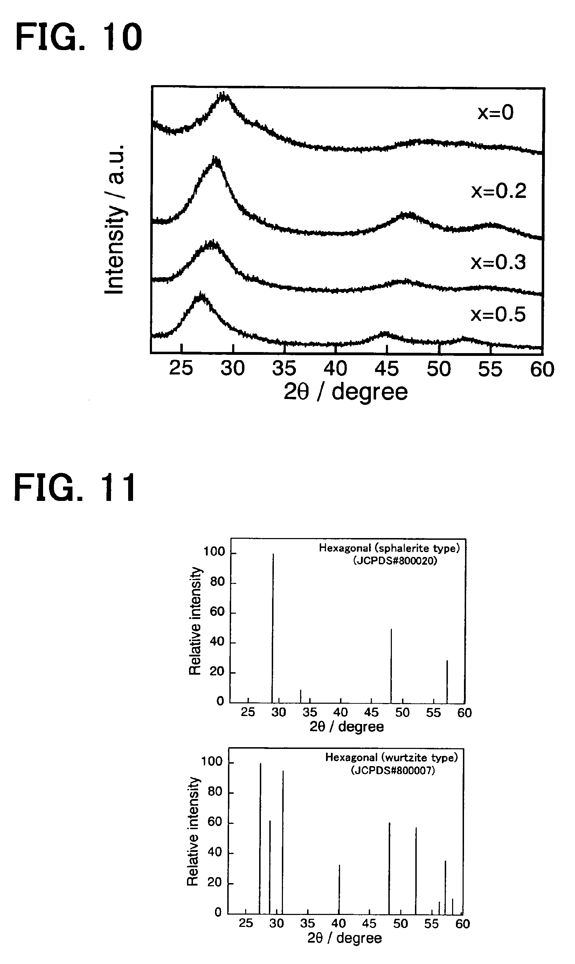

The crystal structure of Zn₁₋₂ₓInₓAgₓS₂ nanoparticles was determined by XRD measurement using a powder X-ray diffraction measurement apparatus (Rigaku Industrial Corporation, RINT2100). Fig. 10 shows the obtained XRD patterns. A measurement sample was prepared as follows: Methanol was added to the oleylamine solution of the nanoparticles (the nanoparticles produced by heating together with oleylamine) which were prepared in each of Examples 5 to 7 to precipitate the nanoparticles. Then, the precipitates were separated by centrifugation and then dissolved in chloroform. Then, methanol was again added to precipitate the nanoparticles, and the precipitates were recovered by centrifugation. The precipitates were washed with methanol several times and then dried under a reduced pressure to obtain Zn₁₋₂ₓInₓAgₓS₂ nanoparticles. Nanoparticles with x = 0 (i.e., ZnS nanoparticles) were prepared by the same method as described above.

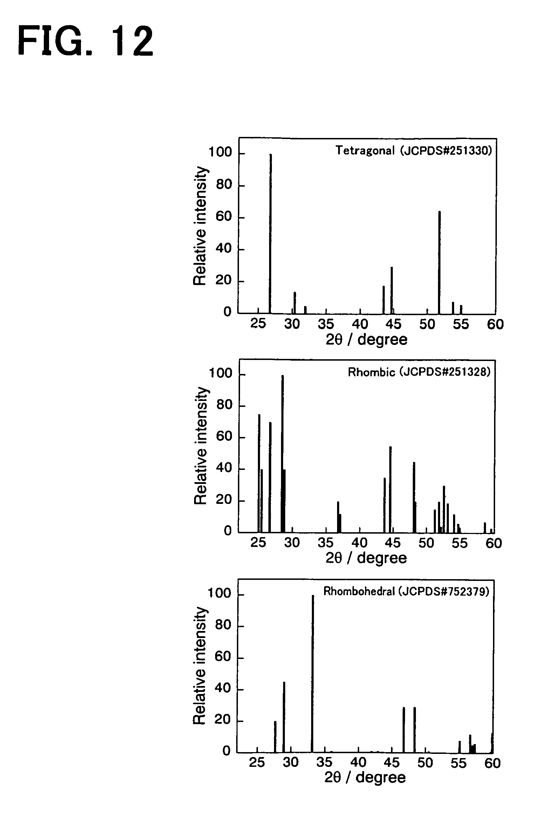

Fig. 10 indicates that in any type of nanoparticles, three large peaks were observed in a 2θ region of 25° or more regardless of the x value, and thus these nanoparticles have similar crystal structures. Any one of the three peaks shifts to the lower angle side as the x value increases. This tendency well agrees with the results reported by Kudo et al. using synthesized bulk Zn1-2x(AgIn)xS particles (J. Am. Chem. Soc., vol. 126, p. 13406 (2004)). Also, this suggests that the distance of lattice planes of the nanoparticles increases as the x value increases. For ZnS, hexagonal (wurtzite type) and cubic (sphalerite type) crystal structures are known. Therefore, in a comparison between the XRD patterns of the known crystal structures (refer to Fig. 11) and the XRD pattern with x = 0 (refer to Fig. 10), the resultant ZnS nanoparticles show very broad diffraction peaks, but the peak positions and intensities well agree with those of reported cubic structure ZnS. On the other hand, for AgInS₂, tetragonal, rhombic, and rhombohedral crystal structures are known. Therefore, in a comparison between the XRD patterns of the known crystal structures (refer to Fig. 12) and the XRD pattern with x = 0.5 (refer to Fig. 10), the resultant AgInS₂ nanoparticles show very broad diffraction peaks, but the peak positions and intensities well agree with those of reported tetragonal structure AgInS₂. Since the crystal structures of tetragonal AgInS₂ and cubic (sphalerite type) ZnS have the same relative positional relation between cation (metal ion) and anion (sulfide ion), it is suggested that the relative positional relation between cation (metal ion) and anion (sulfide ion) in the crystal structure of the resultant Zn₁₋₂ₓInₓAgₓS nanoparticles is the same as that of these two crystal structures.

### EXAMPLE 9

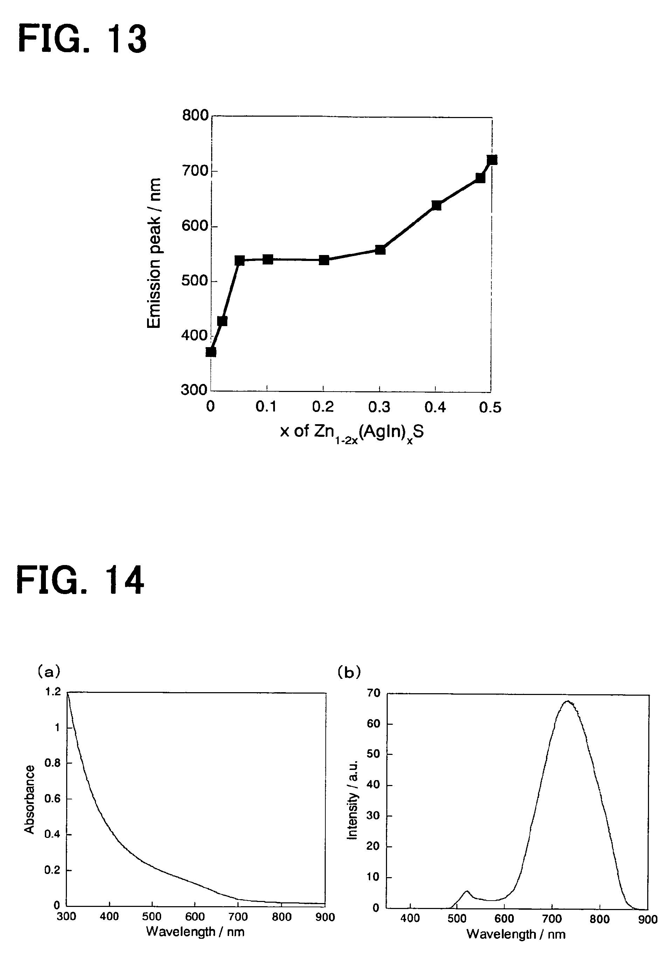

Nine types of Zn₁₋₂ₓInAgₓS nanoparticles with x = 0, 0.02, 0.05, 0.1, 0.2, 0.3, 0.4, 0.48, and 0.5 were prepared according to the method in Example 5, and each type of nanoparticles was dissolved in chloroform to measure emission using exciting light at 350 nm. Fig. 13 shows a relation between the emission peak position and x value. Fig. 13 indicates that the emission peak wavelength shifts from 430 nm to a longer wavelength of 690 nm as the x value increases from 0.02 to 0.48. This result reveals that emission of blue light to red light can be achieved by changing the x value of Zn₁₋₂ₓInₓAgₓS nanoparticles in the range of 0 < x < 0.5.

### EXAMPLE 10

Zn₁₋₂ₓInₓCuₓS (x = 0.2) nanoparticles were prepared as follows: First, 500 ml of an aqueous solution containing 0.4 mmol·dm⁻³ of Et₂NCS₂Na·3H₂O (Wako, extra-pure reagent) was prepared. Also, 500 ml of an aqueous solution containing 0.080 mmol·dm⁻³ of CuCl (Kishida, extra-pure reagent), 0.080 mmol·dm⁻³ of InCl₃·4H₂O (Wako), and 0.24 mmol·dm⁻³ of ZnCl₂ (Kishida, extra-pure reagent) was prepared. The former solution was placed in a 1000-ml eggplant-type flask, and the latter solution was slowly added thereto under stirring. After stirring for 20 minutes, the produced precipitates were recovered by centrifugation and then washed with ion exchanged water three times and methanol (Wako, extra-pure reagent) two times. The resultant precipitates were dried under a reduced pressure to recover 0.02 g of brown precipitates (Zn₁₋₂ₓInₓCUₓ(S₂CNEt₂)₂) complex). Then, 0.018 g of the thus-obtained complex was placed in a test tube, and the test tube was sealed after the vapor phase was purged with nitrogen for 10 minutes. The test tube was heated at 180°C for 30 minutes under stirring. After air cooling, 3 cm³ of oleylamine (Tokyo Chemical Industry Co., Ltd.) was added to the test tube, and the test tube was sealed after bubbling with nitrogen for 10 minutes, followed by heating and stirring at 180°C for 30 minutes. After air cooling, the supernatant was recovered by centrifugation, and methanol (Wako, extra-pure reagent) was added thereto to precipitate the particles dissolved in oleylamine. The produced precipitates were recovered by centrifugation and dissolved in chloroform (Wako, extra-pure reagent), and methanol was again added thereto to precipitates the particles, thereby removing impurities. The produced precipitates (Zn₁₋₂ₓInₓCuₓS (x = 0.2) nanoparticles) were recovered by centrifugation and dissolved in chloroform, and absorption and emission spectra were measured. Fig. 14(a) shows the absorption spectrum of the nanoparticles, and Fig. 14(b) shows the emission spectrum thereof.

Fig. 14(a) shows absorption rising at 720 nm. Also, Fig. 14(b) shows strong light emission at 730 nm. Since the emission peak substantially coincides with the absorption onset wavelength of the particles, the emission is found to be band gap emission of (CuIn)ₓZn₁₋₂ₓS (x = 0.2) particles.

The present invention is not limited to the above-described examples, and, of course, the invention can be carried out in various modes within the technical scope of the present invention. This application claims priority of Japanese Patent Application No. 2005-255656 filed on September 2, 2005, the entire contents of which are incorporated herein by reference.

### Industrial Applicability

The semiconductor nanoparticles of the present invention can be used as a material for vital staining dyes and optical devices such as white LED by using the emission characteristics.

## Claims

1. A semiconductor nanoparticle which emits light at room temperature, comprising a sulfide or oxide containing zinc, a Group 11 element in the periodic table, and a Group 13 element in the periodic table as a main component or a sulfide or oxide containing a Group 11 element in the periodic table and a Group 13 element in the periodic table as a main component.

2. A semiconductor nanoparticle which emits light at room temperature, comprising a sulfide or oxide containing zinc, a Group 11 element in the periodic table, and a Group 13 element in the periodic table as a main component or a sulfide or oxide containing a Group 11 element in the periodic table and a Group 13 element in the periodic table as a main component, the surface of the nanoparticle being modified with a lipid-soluble compound.

3. A semiconductor nanoparticle which emits light at room temperature and is produced by mixing a zinc salt, a salt of a Group 11 element in the periodic table, a salt of a Group 13 element in the periodic table, and a ligand containing sulfur or oxygen as a coordinating element or mixing a salt of a Group 11 element in the periodic table, a salt of a Group 13 element in the periodic table, and a ligand containing sulfur or oxygen as a coordinating element to form a complex, heating the complex to form a heat-treated product, and heating the heat-treated product together with a lipid-soluble compound.

4. A semiconductor nanoparticle which emits light at room temperature and is produced by mixing a zinc salt, a salt of a Group 11 element in the periodic table, a salt of a Group 13 element in the periodic table, and a ligand containing sulfur or oxygen as a coordinating element or mixing a salt of a Group 11 element in the periodic table, a salt of a Group 13 element in the periodic table, and a ligand containing sulfur or oxygen as a coordinating element to form a complex, and heating the complex together with a lipid-soluble compound.

5. The semiconductor nanoparticle according to claim 3 or 4, wherein the zinc salt, the salt of the Group 11 element in the periodic table, the salt of the Group 13 element in the periodic table, and the ligand containing sulfur or oxygen as a coordinating element are mixed so that the ratio between the numbers of atoms of zinc, the Group 11 element in the periodic table, and the Group 13 element in the periodic table is (1 - 2x):x:x (wherein 0 < x < 0.5) or the salt of the Group 11 element in the periodic table, the salt of the Group 13 element in the periodic table, and the ligand containing sulfur or oxygen as a coordinating element are mixed so that the ratio between the numbers of atoms of the Group 11 element in the periodic table and the Group 13 element in the periodic table is 1:1.

6. The semiconductor nanoparticle according to claim 5, wherein the property of the luminescent color after excitation with exciting light varies according to the x value.

7. The semiconductor nanoparticle according to any one of claims 2 to 6, wherein the lipid-soluble compound is a nitrogen-containing compound having a hydrocarbon group having 4 to 20 carbon atoms.

8. The semiconductor nanoparticle according to any one of claims 1 to 7, wherein the Group 11 element in the periodic table is Ag or Cu.

9. The semiconductor nanoparticle according to any one of claims 1 to 8, wherein the Group 13 element in the periodic table is Ga or In.

10. A method of producing a semiconductor nanoparticle which emits light at room temperature, comprising mixing a zinc salt, a salt of a Group 11 element in the periodic table, a salt of a Group 13 element in the periodic table, and a ligand containing sulfur or oxygen as a coordinating element or mixing a salt of a Group 11 element in the periodic table, a salt of a Group 13 element in the periodic table, and a ligand containing sulfur or oxygen as a coordinating element to form a complex, heating the complex to form a heat-treated product, and heating the heat-treated product together with a lipid-soluble compound.

11. A method of producing a semiconductor nanoparticle which emits light at room temperature, comprising mixing a zinc salt, a salt of a Group 11 element in the periodic table, a salt of a Group 13 element in the periodic table, and a ligand containing sulfur or oxygen as a coordinating element or mixing a salt of a Group 11 element in the periodic table, a salt of a Group 13 element in the periodic table, and a ligand containing sulfur or oxygen as a coordinating element to form a complex, and heating the complex together with a lipid-soluble compound.

12. The method according to claim 10 or 11, wherein the zinc salt, the salt of the Group 11 element in the periodic table, the salt of the Group 13 element in the periodic table, and the ligand containing sulfur or oxygen as a coordinating element are mixed so that the ratio between the numbers of atoms of zinc, the Group 11 element in the periodic table, and the Group 13 element in the periodic table is (1 - 2x):x:x (wherein 0 < x < 0.5) or the salt of the Group 11 element in the periodic table, the salt of the Group 13 element in the periodic table, and the ligand containing sulfur or oxygen as a coordinating element are mixed so that the ratio between the numbers of atoms of the Group 11 element in the periodic table and the Group 13 element in the periodic table is 1:1.
